# FASCICULE DE BREVET EUROPEEN

(11) **EP 3 936 848 B1**
(45) Date de publication et mention de la délivrance du brevet: **28.09.2022**
(21) Numéro de dépôt: 21183667.1
(22) Date de dépôt: 05.07.2021
(51) Int. Cl.: G01M 13/04

(54) **DISPOSITIF DE TEST DE PARAMÈTRES RELATIFS À AU MOINS UN ROULEMENT, ET PROCÉDÉ DE TEST ASSOCIÉ**
VORRICHTUNG ZUR PRÜFUNG VON PARAMETERN, DIE SICH AUF MINDESTENS EIN LAGER BEZIEHEN, UND ENTSPRECHENDES PRÜFVERFAHREN
DEVICE FOR TESTING PARAMETERS RELATIVE TO AT LEAST ONE BEARING, AND ASSOCIATED TESTING METHOD

(30) Priorité: 06.07.2020 FR 2007151
(43) Date de publication de la demande: 12.01.2022
(73) Titulaire: ALSTOM Transport Technologies, 93400 Saint-Ouen (FR)
(72) Inventeur: ROBBE, Gilles, 25660 MONTFAUCON (FR)
(74) Mandataire: Lavoix

(56) Documents cités:
- CN-B- 108 827 633
- SU-A1- 1 525 493
- US-A- 2 887 875
- US-A- 4 235 092

## Description

La présente invention concerne un dispositif de test de paramètres relatifs à au moins un roulement, et un procédé de test de paramètres relatifs à au moins un roulement mis en oeuvre par le dispositif.

Dans le cadre du développement des moteurs de traction à haute vitesse, comprenant un stator, un rotor, un arbre de transmission et au moins un roulement, par exemple adaptés pour des véhicules ferroviaires à grande vitesse, il est nécessaire d'adapter les roulements, pour limiter leur usure dans le temps, consécutive à des frottements plus importants que les frottements occasionnés dans des moteurs adaptés pour faire rouler un véhicule à une vitesse plus faible.

Un véhicule ferroviaire à grande vitesse, selon l'Union Internationale des Chemins de fer, est défini comme pouvant rouler à des vitesses supérieures à 250 km/h sur des lignes spécialisées et supérieures à 200 km/h sur des lignes standards adaptées.

Un roulement comprend de façon connue une pluralité de billes ou de rouleaux contenus dans une cage annulaire entre une bague externe et une bague interne.

Une première architecture de roulement connue comprend un roulement classique à billes et un roulement classique à rouleaux, mais cette architecture n'est pas adaptée à la grande vitesse du fait du niveau élevé de vibrations. Une deuxième architecture de roulement connue comprend des roulements de broche adaptés à la très haute vitesse, constitués d'une paire de roulements à billes adjacents, c'est-à-dire sans jeu axial entre les deux roulements, à contact oblique préchargés, ce qui signifie que chaque roulement à billes ne présente pas de jeu radial entre la bague interne et les billes et qu'un effort radial est appliqué pour obtenir un jeu légèrement négatif.

Cependant, dans les conditions d'un moteur de traction à haute vitesse, le rotor en tournant monte en température plus rapidement que le stator, et de ce fait se dilate. La bague interne des roulements de broche est pressée radialement, réduisant le jeu radial des roulements.

Compte tenu des accumulations de tolérances des différentes pièces constituant un moteur, il est souhaitable de détendre la précharge, voire de prévoir un jeu positif, afin d'obtenir une durée de vie des roulements satisfaisante, mais sans installer un jeu trop important qui serait très préjudiciable à la durée de vie de la cage du roulement. Z Des dispositifs de test de paramètres relatifs à un roulement pour déterminer une force de frottement sont décrits dans les publications SU1525493 A1 et US2887875 A.

Il existe donc un besoin de prédire le comportement d'une architecture de roulements pour pouvoir proposer un meilleur compromis possible entre précharge et jeu radial du roulement.

A cet effet, la présente invention a pour objet un dispositif de test de paramètres relatifs à au moins un roulement, caractérisé en ce qu'il comprend au moins :
(a) un rotor,
(b) un arbre de transmission relié au rotor,
(c) au moins un roulement à tester,
(d) un palier,
(e) un roulement externe, le roulement à tester étant fixé autour de l'arbre de transmission et emmanché dans le palier, le roulement externe étant agencé autour du palier de sorte que le palier est libre en rotation autour du roulement à tester, et
(f) un appareil de mesure d'inclinaison comprenant un capteur d'inclinaison électronique fixé au palier et agencé pour mesurer et enregistrer à intervalles réguliers une position angulaire du capteur d'inclinaison électronique.

Grâce au palier laissé libre et au capteur d'inclinaison électronique, la pression interne induit un couple qui est transmis au roulement extérieur, lequel porte le capteur d'inclinaison électronique, étant également un balancier de par son poids. La position angulaire du capteur d'inclinaison électronique est donc une image du couple. Les mesures de position angulaire à l'aide du dispositif de test permettent de comparer l'influence de paramètres sur le couple résistant et donc sur la durée de vie du roulement à tester.

Un dispositif de test selon l'invention peut comporter en outre l'une ou plusieurs des caractéristiques suivantes, prises seules ou selon toutes combinaisons techniquement envisageables :
- l'arbre de transmission s'étend principalement suivant une direction longitudinale, et le dispositif comprend une paire de roulements à tester adjacents suivant la direction longitudinale ;
- le dispositif comprend un capteur de température configuré pour mesurer la température au voisinage du roulement à tester ;
- le roulement à tester est un roulement de moteur de traction de véhicule, notamment de véhicule ferroviaire à grande vitesse ;
- l'appareil de mesure d'inclinaison est relié à une unité de traitement des mesures effectuées.

La présente invention a également pour objet un procédé de test de paramètres relatifs à au moins un roulement, comprenant au moins les étapes suivantes:
(a) la fourniture d'un dispositif de test selon l'un des modes de réalisation précédemment décrits,
(b) la mise en rotation de l'arbre de transmission entraînant le roulement à tester et créant un couple entraînant le palier et le capteur d'inclinaison électronique en rotation autour de l'arbre de transmission,
(c) la mesure et l'enregistrement à intervalles réguliers d'une position angulaire du capteur d'inclinaison électronique,
(d) la modification d'au moins un paramètre relatif au roulement à tester (14),
(e) le renouvellement des étapes (b) et (c),
(f) la comparaison des valeurs obtenues aux étapes (c) et (e), et
(g) la conclusion par rapport au paramètre testé.

Selon des modes de réalisation particuliers du procédé de test, pris seuls ou en combinaison :
- le procédé comprend à l'étape (c) la mesure et l'enregistrement à intervalles réguliers de la température au voisinage du roulement à tester, et à l'étape (f) la comparaison des valeurs de température mesurées au cours du test ;
- le paramètre relatif à au moins un roulement est choisi parmi un jeu interne du roulement à tester, un désalignement de plusieurs roulements à tester, un sens de rotation du rotor, une vitesse de rotation du rotor, un effort axial appliqué au dispositif de test ;
- le procédé comprend en outre l'emmanchement du roulement à tester dans le palier et l'agencement du roulement externe autour du palier tel que le palier est libre en rotation autour du roulement à tester ;
- le procédé comprend en outre l'étape suivante : la mesure et l'enregistrement d'une position angulaire de repos du capteur d'inclinaison électronique lorsque l'arbre de transmission n'est pas en rotation.

D'autres aspects et avantages de l'invention apparaîtront à la lecture de la description qui suit, donnée à titre d'exemple et faite en référence aux dessins annexés, dans lesquels :
- la Figure 1 est une représentation schématique en coupe transversale d'un dispositif de test selon l'invention,
- la Figure 2 est une représentation schématique en perspective de côté du dispositif de test de la Figure 1,
- la Figure 3 est un graphique représentant les variations d'angle du capteur d'inclinaison électronique du dispositif de test, et
- la Figure 4 est un graphique représentant les variations de température ambiante et de température de roulements à tester lors d'un procédé de test selon l'invention.

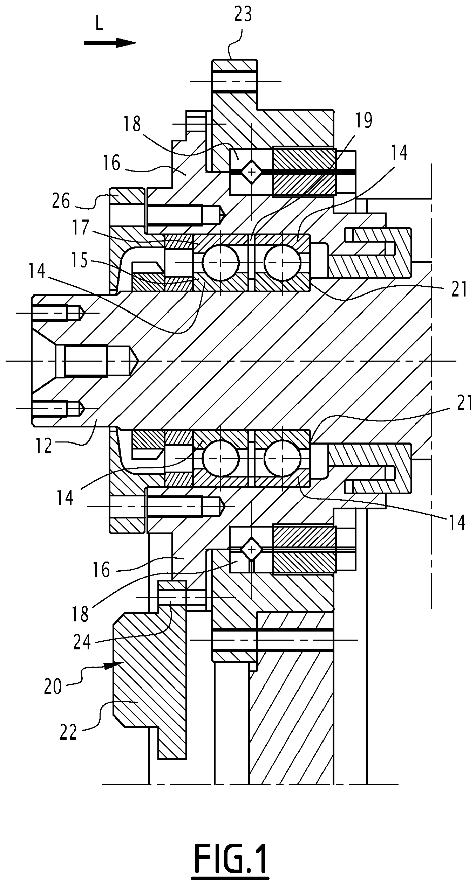

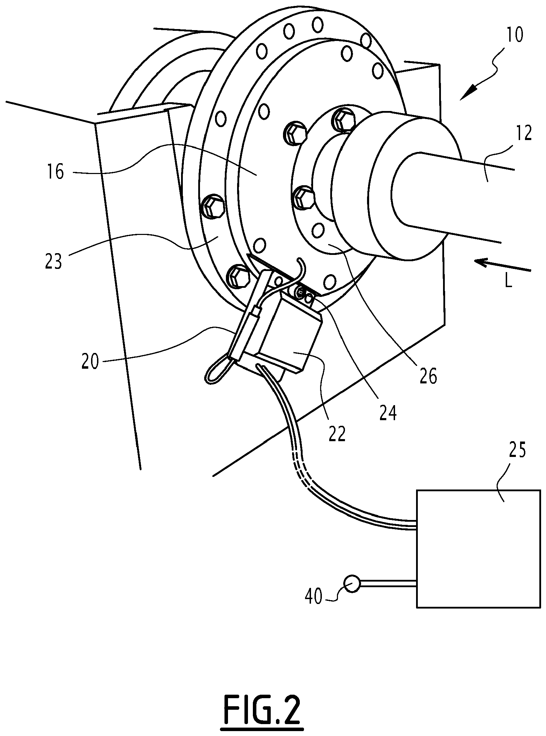

Les Figures 1 et 2 représentent un dispositif 10 de test de paramètres relatifs à au moins un roulement.

Le dispositif de test 10 des Figures 1 et 2 comprend un arbre de transmission 12 relié à un rotor, deux roulements à tester 14, un palier 16, un roulement externe 18 et un appareil de mesure d'inclinaison 20.

En variante non représentée, le dispositif de test comprend un roulement à tester ou au moins trois roulements à tester.

L'arbre de transmission 12 est propre à mettre le dispositif 10 en rotation. L'arbre de transmission 12 est par exemple un arbre de transmission de moteur de véhicule, en particulier de moteur de véhicule ferroviaire.

L'arbre de transmission 12 s'étend principalement suivant une direction longitudinale L.

Chaque roulement à tester 14 est de préférence un roulement à billes.

Chaque roulement à tester 14 est de préférence adapté à un véhicule ferroviaire à grande vitesse.

Chaque roulement à tester 14 comprend une bague interne 15 et une bague externe 17.

En particulier, les roulements à tester 14 sont une paire de roulements à billes adjacents à contact oblique en opposition en X, c'est-à-dire que la bague externe 17 est plus mince du côté d'un premier roulement à tester 14 faisant face à un second roulement à tester 14, comme sur la figure 1.

Chaque roulement à tester 14 est fixé autour de l'arbre de transmission 12 et emmanché dans le palier 16. Sur la Figure 1, le dispositif 10 comprend une paire de roulements à tester 14 disposés l'un à côté de l'autre suivant la direction longitudinale L. Les deux roulements à tester 14 sont séparés par une entretoise 19 dont la longueur prise suivant la direction longitudinale L est inférieure ou égale à 1,5 millimètres.

L'entretoise 19 permet de créer un léger jeu axial entre les deux bagues externes 17 des roulements à tester 14.

Dans l'exemple de la Figure 1, l'arbre de transmission 12 présente un épaulement 21 à sa circonférence. L'épaulement 21 maintient les roulements à tester 14 suivant la direction longitudinale L.

Chaque roulement à tester 14 est solidaire en rotation de l'arbre de transmission 12, ainsi la rotation de l'arbre de transmission 12 entraîne celle de chaque roulement à tester 14.

Le roulement externe 18 est choisi pour être extrêmement rigide perpendiculairement à l'arbre de transmission 12. En d'autres termes, le jeu radial du roulement externe 18 est nul de sorte que la rotation de l'arbre de transmission 12 n'entraîne pas un mouvement radial du roulement externe 18 mais uniquement une rotation autour de l'arbre de transmission 12.

Avantageusement, le roulement externe 18 est un roulement à rouleaux croisés.

Le roulement externe 18 est agencé autour du palier 16. Cela permet au palier 16 d'être libre en rotation autour de chaque roulement à tester 14. C'est-à-dire qu'une rotation de la bague interne 15 du roulement à tester 14 entraînée par la rotation de l'arbre de transmission 12 se fait à l'intérieur du palier 16 sans entraîner la rotation du palier 16.

Pour un roulement à billes théorique, les frottements entre les billes et la bague externe sont nuls. En pratique, les frottements ne sont jamais nuls et un couple résistant est engendré, entraînant la bague externe très légèrement en rotation. Dans l'exemple représenté, la bague externe 17 est entraînée par les frottements radiaux occasionnés et entraîne elle-même le palier 16 en rotation.

Le roulement externe 18 est emmanché dans un bâti 23.

L'appareil de mesure d'inclinaison 20 comprend un capteur d'inclinaison électronique 22 propre à effectuer des mesures d'inclinaison du capteur d'inclinaison en rotation par rapport au palier 16 lorsque l'arbre de transmission 12 est à l'arrêt. De préférence, l'appareil de mesure d'inclinaison 20 comprend en outre une mémoire propre à enregistrer les mesures effectuées par le capteur d'inclinaison électronique 22.

Le capteur d'inclinaison électronique 22 est fixé au palier 16, par exemple à l'aide de visserie 24.

L'appareil de mesure d'inclinaison 20 est par exemple relié à une unité 25 de traitement des mesures effectuées. L'unité 25 de traitement des mesures effectuées comprend par exemple un processeur.

L'appareil de mesure d'inclinaison 20 est propre à mesurer et enregistrer les positions angulaires prises par le capteur d'inclinaison électronique 22.

En fonctionnement, le capteur d'inclinaison 22 est entraîné en rotation par le palier 16 libre en rotation autour de l'arbre de transmission 12.

Le capteur d'inclinaison 22 joue le rôle de balancier de par son poids.

Sur la Figure 1, l'arbre de transmission 12 est à l'arrêt, le capteur d'inclinaison 22 est dans une position de repos verticale, perpendiculaire à la direction longitudinale L et suivant la gravité. Dans cette configuration, le couple résistant est nul.

Lorsque l'arbre de transmission 12 est en rotation, la rotation de chaque roulement à tester 14 entraîne des frottements radiaux sur la bague externe 17 du roulement à tester 14 engendrant un couple résistant. Ce couple résistant entraîne le palier 16 légèrement en rotation qui entraîne à son tour le capteur d'inclinaison électronique 22. Le poids du capteur d'inclinaison électronique 22 s'oppose au couple résistant et entraîne le capteur d'inclinaison électronique 22 vers sa position de repos. Le capteur d'inclinaison électronique 22 est éloigné de sa position de repos et forme un angle avec sa position de repos, ledit angle étant fonction du couple résistant engendré. Le capteur d'inclinaison électronique 22 oscille légèrement autour d'une position angulaire d'équilibre avant de retrouver sa position de repos.

L'angle formé est compris entre 0° en position de repos et 90° lorsque le capteur d'inclinaison atteint une inclinaison maximale parallèle à la direction longitudinale L.

En particulier, l'angle formé par le capteur d'inclinaison électronique 22 en position d'équilibre est compris entre 25° et 35° en valeur absolue.

De préférence, le dispositif 10 comprend un capteur de température (non représenté) permettant de relever la température au voisinage du roulement en test 14 lorsque le dispositif est en test.

Par « relever la température au voisinage du roulement à tester », il est entendu ici que le capteur est propre à relever la température à une distance du roulement par exemple comprise entre 0 mm et 50 mm, de préférence entre 0 mm et 40 mm. Plus précisément, pour relever la température, le boitier qui va recevoir le roulement à tester 14 est pré-percé par un trou débouchant au niveau du roulement à tester 14 et suite au montage du roulement à tester 14, on passe par le trou un thermocouple qui vient directement en contact avec la bague externe 17 du roulement à tester 14. La mesure de température sera donc effectuée à une distance sensiblement nulle par rapport au roulement à tester 14.

De préférence, le capteur de température comprend une mémoire propre à enregistrer les valeurs de température relevées.

Par exemple, la température du roulement à tester 14 est relevée en continu. Le dispositif 10 comprend de préférence en outre un capteur 40 de température ambiante permettant de relever la température ambiante lors des mesures. La température ambiante sert ainsi de témoin.

Un procédé de test de paramètres relatifs à au moins un roulement à l'aide du dispositif 10 va maintenant être décrit.

Le procédé comprend la fourniture du dispositif de test 10 décrit ci-dessus.

Pour monter le dispositif 10, chaque roulement à tester 14 est emmanché dans le palier 16.

Chaque roulement à tester 14 est fixé à l'arbre de transmission 12, et est maintenu longitudinalement d'une part par l'épaulement 21 et d'autre part par une pièce de maintien 26 fixée au palier 16. De préférence, lorsque au moins deux roulements 14 sont à tester, l'entretoise 19 est disposée longitudinalement entre les roulements à tester 14.

Le paramètre relatif à au moins un roulement à tester 14 est par exemple choisi parmi un jeu radial du roulement à tester 14, un désalignement de la bague interne 15 par rapport à la bague externe 17 du roulement à tester 14, un sens de rotation du rotor, une vitesse de rotation du rotor, un effort axial appliqué au roulement à tester 14.

Selon le paramètre testé, chaque roulement à tester 14 est disposé selon un premier état du paramètre.

Le roulement externe 18 est monté autour du palier 16 de telle sorte que le palier 16 est libre en rotation autour du roulement à tester 14, c'est-à-dire qu'une rotation de la bague interne 15 du roulement à tester 14 entraînée par la rotation de l'arbre de transmission 12 se fait à l'intérieur du palier 16 sans entraîner la rotation du palier 16.

Le capteur d'inclinaison électronique 22 est fixé au palier 16.

L'appareil de mesure d'inclinaison 20 est mis en fonctionnement.

Une position angulaire de repos du capteur d'inclinaison électronique 22 dans laquelle l'arbre de transmission 12 n'est pas en rotation est mesurée par le capteur d'inclinaison électronique 22. Dans cette position, l'angle est égal à 0°.

De préférence, la position angulaire de repos est enregistrée dans la mémoire de l'appareil de mesure d'inclinaison 20.

De préférence, le capteur 40 de température ambiante relève la température ambiante.

De préférence, le capteur de température du roulement à tester 14 relève la température au voisinage du roulement à tester 14.

L'arbre de transmission 12 est mis en rotation.

La rotation de l'arbre de transmission 12 entraîne chaque roulement à tester 14 et les frottements occasionnés sur la bague externe 17 créent un couple résistant entraînant le palier 16 et le capteur d'inclinaison électronique 22 en rotation autour de l'arbre de transmission 12, par l'intermédiaire du roulement extérieur 18.

Le couple résistant ainsi créé est une image des pressions internes régnant à l'intérieur des roulements à tester 14.

Plus les valeurs de pressions internes sont élevées et plus l'architecture de roulements à tester 14 dans un moteur de traction à haute vitesse risque de s'user rapidement.

Un test dure par exemple 24 heures.

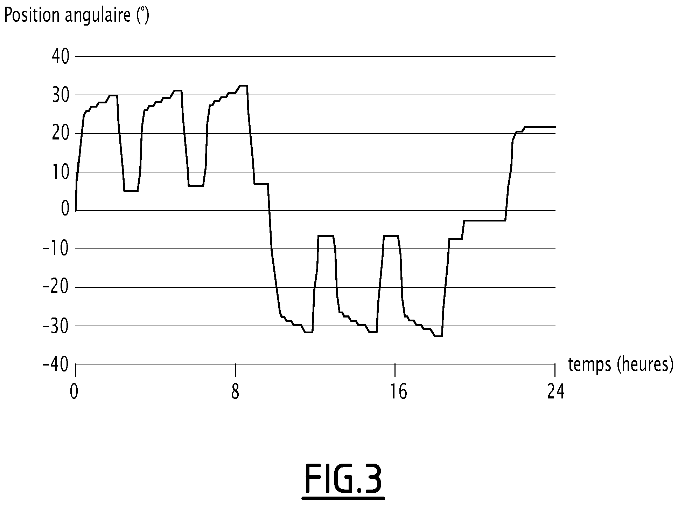

Un exemple de mesure d'angle par le capteur d'inclinaison lors d'un test est représenté sur la figure 3.

L'arbre de transmission 12 est entraîné en rotation plusieurs fois dans un sens, puis plusieurs fois dans l'autre sens.

Le capteur d'inclinaison électronique 22 oscille légèrement autour de la position angulaire d'équilibre avant de retrouver sa position de repos.

De préférence, la mémoire de l'appareil de mesure d'inclinaison 20 enregistre l'ensemble des positions angulaires prises par le capteur d'inclinaison électronique 22.

La température ambiante et la température au voisinage de chaque roulement à tester 14 sont par exemple relevées en continu lors du test.

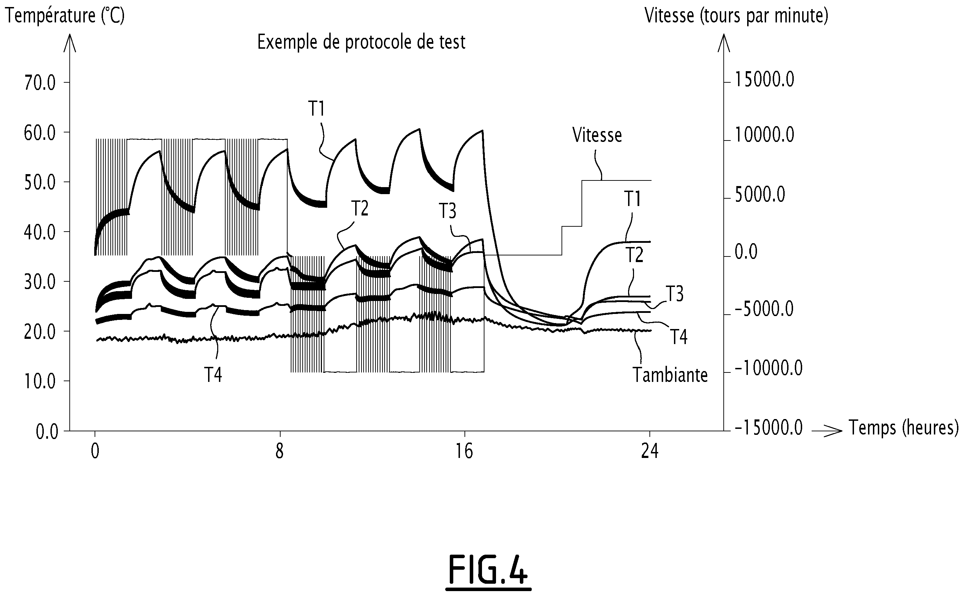

Un exemple de protocole de test est représenté sur la figure 4.

Le capteur de température du roulement à tester 14 relève la température au voisinage du roulement à tester 14. Dix-huit cycles de 4,7 minutes chacun sont répétés, pendant lesquels l'arbre de transmission 12 est entraîné en rotation dans un premier sens de rotation de la vitesse nulle à la vitesse maximale.

La vitesse maximale de rotation est par exemple de 10 000 tours par minute.

Puis un cycle de 80 minutes à vitesse maximale est appliqué.

L'ensemble des dix-huit cycles et du cycle de 80 minutes est répété trois fois.

Puis ce même ensemble de cycles est répété trois fois en entraînant en rotation l'arbre de transmission 12 dans l'autre sens.

Un temps d'arrêt de quatre heures est appliqué afin de refroidir les roulements.

Puis un cycle de trois heures est appliqué en entraînant en rotation l'arbre de transmission 12 dans le premier sens de rotation à vitesse constante à la vitesse moyenne d'un véhicule ferroviaire. Par exemple, à vitesse moyenne d'un véhicule à grande vitesse, c'est-à-dire entre 6000 et 7000 tours par minute.

Des exemples de courbes de température sont représentés sur la figure 4.

Chaque courbe T1 à T4 correspond à la courbe de température au voisinage du roulement à tester en fonction du temps, et selon un paramètre testé.

A la fin de la mesure, selon le paramètre testé, chaque roulement à tester 14 est disposé selon un deuxième état du paramètre, distinct du premier état. Par exemple, lorsque le paramètre testé est l'effort axial appliqué sur le roulement à tester 14, seul cet effort est modifié d'une mesure à l'autre. Seul le paramètre testé est modifié entre les mesures de test dudit paramètre, mais le protocole de test est identique entre chaque test.

Si nécessaire, le dispositif 10 est démonté et remonté selon le paramètre à tester. Par exemple, le jeu radial du ou de chaque roulement à tester 14 est modifié.

L'appareil de mesure d'inclinaison 20 est mis en fonctionnement.

Dans cette position, l'angle est égal à 0°.

L'arbre de transmission 12 est mis en rotation.

La rotation de l'arbre de transmission 12 entraîne chaque roulement à tester 14 et crée un couple entraînant le palier 16 et le capteur d'inclinaison électronique 22 en rotation autour de l'arbre de transmission 12, par l'intermédiaire du roulement extérieur 18.

Après une durée au bout de laquelle le palier 16 atteint une nouvelle position d'équilibre, entraîné d'une part par le roulement à tester 14 en rotation et d'autre part par le capteur d'inclinaison électronique 22, le capteur d'inclinaison électronique 22 mesure une nouvelle position angulaire d'équilibre du capteur d'inclinaison 22, comme cela est montré sur la figure 3 pour un exemple de courbe.

Notamment, sur la figure 3, pour chaque portion de dix-huit cycles de 4,7 minutes chacun, pendant lesquels l'arbre de transmission 12 est entraîné en rotation dans un premier sens de rotation de la vitesse nulle à la vitesse maximale, la position angulaire du capteur d'inclinaison 22 augmente depuis 0° jusqu'à atteindre une position d'équilibre qui augmente au fur et à mesure des cycles, par exemple ici entre 25° et 35°. Lorsqu'un cycle à vitesse maximale est appliqué après une portion de dix-huit cycles de 4,7 minutes chacun, la position angulaire du capteur d'inclinaison 22 diminue jusqu'à une position d'équilibre, par exemple ici comprise entre 5° et 10°.

Puis, pour chaque portion de dix-huit cycles de 4,7 minutes chacun, pendant lesquels l'arbre de transmission 12 est entraîné en rotation dans le sens de rotation opposé de la vitesse nulle à la vitesse maximale, la position angulaire du capteur d'inclinaison 22 diminue depuis 0° jusqu'à atteindre une position d'équilibre qui diminue au fur et à mesure des cycles, par exemple ici entre -25° et -35°. Lorsqu'un cycle à vitesse maximale est appliqué après une portion de dix-huit cycles de 4,7 minutes chacun, la position angulaire du capteur d'inclinaison 22 augmente jusqu'à une position d'équilibre, par exemple ici comprise entre -10° et -5°.

Lors du cycle de trois heures dans lequel l'arbre de transmission 12 est entraîné à vitesse constante à la vitesse moyenne d'un véhicule ferroviaire à grande vitesse, le capteur d'inclinaison 22 augmente jusqu'à atteindre une position d'équilibre, ici légèrement supérieure à 20°.

De préférence, la nouvelle position angulaire d'équilibre est enregistrée dans la mémoire de l'appareil de mesure d'inclinaison 20.

La température ambiante et la température au voisinage de chaque roulement à tester 14 sont par exemple relevées en continu lors du test, et sont mémorisées.

A la fin du test, les valeurs de position angulaire sont comparées.

De préférence, les valeurs de température sont comparées.

Par exemple, l'étape de comparaison est mise en oeuvre par l'unité 25 de traitement des mesures effectuées.

De préférence, pour une meilleure fiabilité du test, chaque état du paramètre est testé plusieurs fois, par exemple trois fois.

A l'issue de la comparaison, le procédé comprend une étape de conclusion par rapport au paramètre testé. Plus les valeurs de température interne, image de la pression régnant autour du roulement à tester 14 sont élevées et plus l'architecture de roulement à tester 14 dans un moteur de traction à haute vitesse risque de s'user rapidement. Ainsi, les températures internes doivent être minimales tout en maintenant un jeu le plus faible possible.

La comparaison est qualitative, et vise surtout à détecter les paramètres influant sur la température interne des roulements en test, autrement dit, détecter les paramètres à risque.

Lors de l'étape de conclusion, il est déterminé entre les deux états du paramètre lequel offre le meilleur compromis entre des pressions internes minimales et un jeu interne minimal.

Le procédé de test peut ensuite être répété autant de fois que nécessaire pour tester différents paramètres, en ne faisant varier qu'un paramètre entre chaque mesure.

Le procédé selon l'invention permet donc de tester de manière simple, fiable et peu coûteuse des roulements en vue de les appliquer à un véhicule ferroviaire notamment à grande vitesse.

## Revendications

1. Dispositif (10) de test de paramètres relatifs à au moins un roulement, **caractérisé en ce qu'**il comprend au moins :
(a) un rotor,
(b) un arbre de transmission (12) relié au rotor,
(c) au moins un roulement à tester (14),
(d) un palier (16),
(e) un roulement externe (18), le roulement à tester (14) étant fixé autour de l'arbre de transmission (12) et emmanché dans le palier (16), le roulement externe (18) étant agencé autour du palier (16) de sorte que le palier (16) est libre en rotation autour du roulement à tester (14), et
(f) un appareil de mesure d'inclinaison (20) comprenant un capteur d'inclinaison (22) électronique fixé au palier (16) et agencé pour mesurer et enregistrer à intervalles réguliers une position angulaire du capteur d'inclinaison (22) électronique.

2. Dispositif (10) de test selon la revendication 1, dans lequel l'arbre de transmission (12) s'étend principalement suivant une direction longitudinale (L), et le dispositif (10) comprend une paire de roulements à tester (14) adjacents suivant la direction longitudinale (L).

3. Dispositif (10) de test selon la revendication 1 ou 2, comprenant un capteur de température configuré pour mesurer la température au voisinage du roulement à tester (14).

4. Dispositif (10) de test selon l'une quelconque des revendications 1 à 3, dans lequel le roulement à tester (14) est un roulement de moteur de traction de véhicule ferroviaire, notamment de véhicule ferroviaire à grande vitesse.

5. Dispositif (10) de test selon l'une quelconque des revendications 1 à 4, dans lequel l'appareil de mesure d'inclinaison (20) est relié à une unité de traitement des mesures effectuées.

6. Procédé de test de paramètres relatifs à au moins un roulement, comprenant au moins les étapes suivantes:
(a) la fourniture d'un dispositif (10) de test selon l'une quelconque des revendications précédentes,
(b) la mise en rotation de l'arbre de transmission (12) entraînant le roulement à tester (14) et créant un couple entraînant le palier (16) et le capteur d'inclinaison (22) électronique en rotation autour de l'arbre de transmission (12),
(c) la mesure et l'enregistrement à intervalles réguliers d'une position angulaire du capteur d'inclinaison (22) électronique,
(d) la modification d'au moins un paramètre relatif au roulement à tester (14),
(e) le renouvellement des étapes (b) et (c),
(f) la comparaison des valeurs obtenues aux étapes (c) et (e), et
(g) la conclusion par rapport au paramètre testé.

7. Procédé de test selon la revendication 6 dans laquelle le dispositif de test est selon la revendication 3, comprenant à l'étape (c) la mesure et l'enregistrement à intervalles réguliers de la température au voisinage du roulement à tester (14), et à l'étape (f) la comparaison des valeurs de température mesurées au cours du test.

8. Procédé de test selon la revendication 6 ou 7, dans lequel le paramètre relatif à au moins un roulement est choisi parmi un jeu interne du roulement à tester (14), un désalignement de plusieurs roulements à tester (14), un sens de rotation du rotor, une vitesse de rotation du rotor, un effort axial appliqué au dispositif (10) de test.

9. Procédé de test selon l'une quelconque des revendications 6 à 8, comprenant en outre l'emmanchement du roulement à tester (14) dans le palier (16) et l'agencement du roulement externe (18) autour du palier (16) tel que le palier (16) est libre en rotation autour du roulement à tester (14).

10. Procédé de test selon l'une quelconque des revendications 6 à 9, comprenant en outre l'étape suivante : la mesure et l'enregistrement d'une position angulaire de repos du capteur d'inclinaison (22) électronique lorsque l'arbre de transmission (12) n'est pas en rotation.

## Patentansprüche

1. Vorrichtung (10) zum Prüfen von Parametern in Bezug auf mindestens ein Lager, **dadurch gekennzeichnet, dass** sie mindestens Folgendes umfasst:
(a) einen Rotor,
(b) eine Antriebswelle (12), die mit dem Rotor verbunden ist,
(c) mindestens ein zu prüfendes Lager (14),
(d) einen Lagerkörper (16),
(e) ein äußeres Lager (18), wobei das zu prüfende Lager (14) um die Antriebswelle (12) befestigt und in den Lagerkörper (16) eingepresst ist, wobei das äußere Lager (18) um den Lagerkörper (16) angeordnet ist, sodass der Lagerkörper (16) frei um das zu prüfende Lager (14) drehbar ist, und
(f) ein Neigungsmessgerät (20), umfassend einen elektronischen Neigungssensor (22), der an dem Lagerkörper (16) befestigt und angeordnet ist, um in regelmäßigen Abständen eine Winkelposition des elektronischen Neigungssensors (22) zu messen und aufzuzeichnen.

2. Prüfvorrichtung (10) nach Anspruch 1, wobei sich die Antriebswelle (12) hauptsächlich entlang einer Längsrichtung (L) erstreckt und die Vorrichtung (10) ein Paar von zu prüfenden Lagern (14) umfasst, die entlang der Längsrichtung (L) benachbart sind.

3. Prüfvorrichtung (10) nach Anspruch 1 oder 2, umfassend einen Temperatursensor, der konfiguriert ist, um die Temperatur in der Nähe des zu prüfenden Lagers (14) zu messen.

4. Prüfvorrichtung (10) nach einem der Ansprüche 1 bis 3, wobei das zu prüfende Lager (14) ein Lager für einen Fahrmotor eines Schienenfahrzeugs, insbesondere eines Hochgeschwindigkeitsschienenfahrzeugs, ist.

5. Prüfvorrichtung (10) nach einem der Ansprüche 1 bis 4, wobei das Neigungsmessgerät (20) mit einer Verarbeitungseinheit der durchgeführten Messungen verbunden ist.

6. Prüfverfahren von Parametern in Bezug auf mindestens ein Lager, umfassend mindestens die folgenden Schritte:
(a) Bereitstellen einer Prüfvorrichtung (10) nach einem der vorherigen Ansprüche;
(b) Drehen der Antriebswelle (12), die das zu prüfende Lager (14) antreibt und Erzeugen eines Drehmoments, das den Lagerkörper (16) und den elektronischen Neigungssensor (22) in Drehung um die Antriebswelle (12) versetzt,
(c) Messen und Aufzeichnen einer Winkelposition des elektronischen Neigungssensors (22) in regelmäßigen Intervallen,
(d) Ändern von mindestens einem Parameter in Bezug auf das zu prüfende Lager (14),
(e) Wiederholen der Schritte (b) und (c),
(f) Vergleichen der in Schritt (c) und (e) erlangten Werte und
(g) Schlussfolgern in Bezug auf den geprüften Parameter.

7. Prüfverfahren nach Anspruch 6, wobei die Prüfvorrichtung nach Anspruch 3 ist, umfassend in Schritt (c) ein Messen und Aufzeichnen der Temperatur in der Nähe des zu prüfenden Lagers (14) in regelmäßigen Intervallen und in Schritt (f) ein Vergleichen der während der Prüfung gemessenen Temperaturwerte.

8. Prüfverfahren nach Anspruch 6 oder 7, wobei der Parameter in Bezug auf mindestens ein Lager ausgewählt ist aus einem inneren Spiel des zu prüfenden Lagers (14), einer Fehlausrichtung mehrerer zu prüfender Lager (14), einer Drehrichtung des Rotors, einer Drehgeschwindigkeit des Rotors, einer auf die Prüfvorrichtung (10) ausgeübten Axialkraft.

9. Prüfverfahren nach einem der Ansprüche 6 bis 8, ferner umfassend das Einpressen des zu prüfenden Lagers (14) in den Lagerkörper (16) und das Anordnen des äußeren Lagers (18) um den Lagerkörper (16), sodass der Lagerkörper (16) frei um das zu prüfende Lager (14) drehbar ist.

10. Prüfverfahren nach einem der Ansprüche 6 bis 9, ferner umfassend den folgenden Schritt: Messen und Aufzeichnen einer Ruhewinkelposition des elektronischen Neigungssensors (22), wenn die Antriebswelle (12) nicht in Drehung ist.

## Claims

1. A device (10) for testing parameters relating to at least one bearing, **characterised in that** it comprises at least:
(a) a rotor,
(b) a drive shaft (12) connected to the rotor,
(c) at least one bearing to be tested (14),
(d) a housing (16),
(e) an external bearing (18), the bearing to be tested (14) being fixed around the drive shaft (12) and fitted into the housing (16), the external bearing (18) being arranged around the housing (16) so that the housing (16) is free to rotate around the bearing to be tested (14), and
(f) a tilt measurement apparatus (20) comprising an electronic tilt sensor (22) attached to the housing (16) and arranged to measure and record an angular position of the electronic tilt sensor (22) at regular intervals.

2. The testing device (10) according to claim 1, wherein the drive shaft (12) extends mainly along a longitudinal direction (L), and the device (10) comprises a pair of bearings to be tested (14) that are adjacent along the longitudinal direction (L).

3. The testing device (10) according to claim 1 or 2, comprising a temperature sensor configured to measure the temperature in the vicinity of the bearing to be tested (14).

4. The testing device (10) according to any one of claims 1 to 3, wherein the bearing to be tested (14) is a railway vehicle traction motor bearing, in particular a highspeed railway vehicle.

5. The testing device (10) according to any one of claims 1 to 4, wherein the tilt measurement apparatus (20) is connected to a processing unit for the measurements taken.

6. A method for testing parameters relating to at least one bearing, comprising at least the following steps:
(a) providing a testing device (10) according to any one of the preceding claims;
(b) rotating the drive shaft (12) driving the test bearing (14) and creating a torque that rotates the housing (16) and the electronic tilt sensor (22) around the drive shaft (12),
(c) measuring and recording an angular position of the electronic tilt sensor (22) at regular intervals,
(d) changing at least one parameter relating to the bearing to be tested (14),
(e) repeating steps (b) and (c),
(f) comparing the values obtained in steps (c) and (e), and
(g) forming a conclusion in relation to the tested parameter.

7. The testing method according to claim 6 wherein the testing device is according to claim 3, comprising in step (c) measuring and recording at regular intervals the temperature in the vicinity of the bearing to be tested (14), and in step (f) comparing the temperature values measured during the test.

8. The testing method according to claim 6 or 7, wherein the parameter relating to at least one bearing is selected from an internal clearance of the bearing to be tested (14), a misalignment of a plurality of bearings to be tested (14), a direction of rotation of the rotor, a rotational speed of the rotor, an axial force applied to the testing device (10).

9. The testing method according to any one of claims 6 to 8, further comprising fitting the bearing to be tested (14) into the housing (16) and arranging the outer bearing (18) around the housing (16) such that the housing (16) is free to rotate around the bearing to be tested (14).

10. The testing method according to any one of claims 6 to 9, further comprising the step of: measuring and recording a rest angular position of the electronic tilt sensor (22) when the drive shaft (12) is not rotating.
